# EUROPEAN PATENT APPLICATION

(11) **EP 2 520 447 A1**
(43) Date of publication of application: **07.11.2012**
(21) Application number: 12166581.4
(22) Date of filing: 03.05.2012
(51) Int. Cl.: B60D 1/36, B60D 1/62, A01D 41/127, B60D 1/00

(54) **System and method for positioning a vehicle with a hitch using an automatic steering system**

(30) Priority: 03.05.2011 US 201113099858
(71) Applicant: CNH Italia S.p.A., 10135 Turin (IT)
(72) Inventor: Dix, Peter J., Naperville, IL Illinois 60564 (US)
(74) Representative: CNH IP Department

(57) **Abstract**

A system and method is provided for positioning a vehicle (100) with a hitch (114) using an automatic steering system (200) to align the vehicle (100) with an implement (102) so that the implement (102) can be connected to the vehicle (100). The positions of the vehicle (100) and the implement (102) can be determined directly or indirectly from GPS position information. The known positions of the vehicle (100) and implement (102) are then used to calculate a path for the vehicle (100) to align the vehicle (100) with the implement (102). The calculated path is then provided to an automatic steering system (200) of the vehicle (100) to steer the vehicle (100) along the path.

## Description

### BACKGROUND

The present application relates generally to an automatic steering system for a vehicle. The present application relates more specifically to a system and method for using an automatic steering to position a vehicle so that it is aligned with an implement in order to attach the implement to the vehicle.

Vehicles, such as agricultural tractors, can have implements or trailers that can be attached or unattached to the vehicle as different work conditions demand. When an implement or trailer is to be attached to a vehicle, the vehicle has to be backed up to the implement or trailer and the vehicle hitch has to be aligned both laterally (left and right) and longitudinally (fore and aft) with the implement or trailer hitch before the implement or trailer can be connected or attached to the vehicle, such as by inserting a pin or closing a latch.

The alignment of the vehicle hitch with an implement hitch can be a very cumbersome operation for the operator of the vehicle. The operator may back up towards the implement and then realize too late that the vehicle hitch is too far to the left or to the right of the implement hitch to be corrected by adjusting the vehicle steering before reaching the implement. If such a misalignment occurs when backing up to the implement, the operator has to pull the vehicle forward and reattempt the alignment. In addition, the operator may have difficulties in seeing whether the tractor hitch and implement hitch are aligned, and the operator may have to park and exit the vehicle to more carefully examine the alignment. In either situation, the operator may know the vehicle needs to be moved 2 inches for proper alignment, but the operator has to restart the process by pulling the vehicle ahead and then backing up to the implement while trying to adjust the vehicle position 2 inches. If the operator does not successfully align the vehicle hitch and implement hitch on the next attempt, the operator has to repeat the process until alignment occurs.

Therefore, what is needed is a system and method to automatically adjust a vehicle's lateral and longitudinal position relative to an implement to align the vehicle hitch and implement hitch for connection.

### SUMMARY

One way to automatically adjust a vehicle's lateral and longitudinal position relative to an implement is to use an automatic steering or automatic guidance mode or system for the vehicle that is based on a satellite navigation system. The combination of satellite navigation, ground-based navigation input signals regarding vehicle position and an on-board electronic control system permit the vehicle to steer itself with a high degree of accuracy. A vehicle operator can enter the vehicle's lateral and longitudinal offsets from the implement into an automatic steering control system and the vehicle can be steered into the correct position without further control of the steering by the operator.

The present application relates to a method for aligning a tractor and an implement. The method includes determining a position of the tractor, determining a position of the implement, and calculating a path for the tractor using the position of the tractor and the position of the implement. The calculated path is operable to move the tractor toward the determined position of the implement. The method also includes automatically steering the tractor along the calculated path with a control system.

The present application further relates to an automatic guidance system to align a tractor with an implement to be attached to the tractor. The automatic guidance system includes a global positioning system device to determine a position of the tractor and an input device. The input device is configured and positioned to enable an operator to enter information regarding a position of the implement. The automatic guidance system also includes a path controller with a microprocessor to execute a computer program to calculate a path for the tractor to align the tractor and the implement in response to receiving the position of the tractor from the global positioning system device and the position of the implement entered into the input device. The automatic guidance system further includes a steer controller with a microprocessor to execute a computer program to generate a control signal to steer the tractor along the path calculated by the first controller.

One advantage of the present application is the use of auto-guidance or auto-steering technology to assist the operator in aligning the vehicle and implement for attachment.

Another advantage of the present application is that the number of attempts needed to align a vehicle and implement can be minimized since the distance between the vehicle and implement is reduced on each attempt, thereby simplifying the estimation of the remaining distance.

Other features and advantages of the present application will be apparent from the following more detailed description of the exemplary embodiments, taken in conjunction with the accompanying drawings.

### BRIEF DESCRIPTION OF THE FIGURES

FIG. 1 shows a top view of an embodiment of an agricultural tractor and an implement.

FIG. 2 shows schematically an embodiment of a vehicle guidance system.

FIG. 3 shows an embodiment of actual and calculated paths for a tractor attempting to connect to an implement.

FIG. 4 shows a flow chart of an embodiment of a process for positioning a vehicle to connect to an implement.

Wherever possible, the same reference numbers will be used throughout the drawings to refer to the same or like parts.

### DETAILED DESCRIPTION OF THE EXEMPLARY EMBODIMENTS

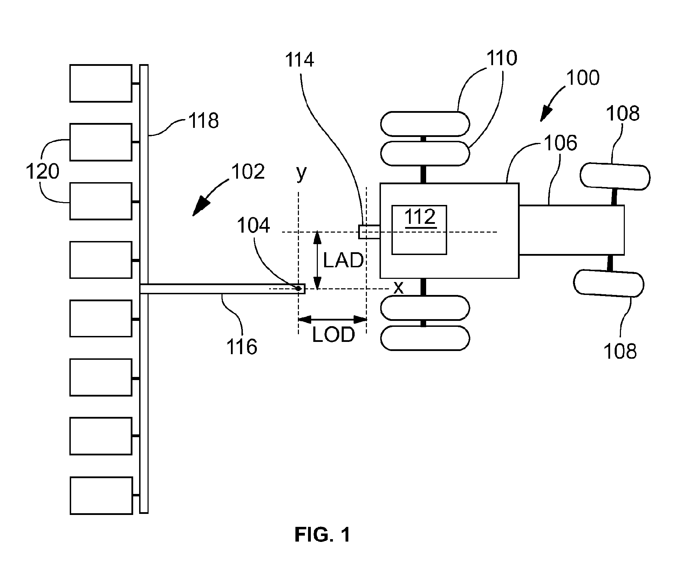

FIG. 1 shows an embodiment of a vehicle and an implement where the vehicle is misaligned with the implement such that the implement cannot be attached to the vehicle. The vehicle or tractor 100 can include a chassis 106, steerable wheels 108, rear drive wheels 110, a GPS (global positioning system) receiver or device 112, and a hitch or drawbar 114. The steerable wheels 108 can be located near the front of the tractor and can be pivotally and rotatably attached to the chassis 106. The rear drive wheels 110 can be located near the rear of the tractor and can be rotatably attached to the chassis 106. The hitch 114 is rigidly attached to the rear of the chassis 106. The GPS receiver 112 can be mounted on the tractor 100 such that reception of satellite signals is maximized. The steerable wheels 108 may be steerable with respect to the frame to which they are mounted, or alternatively they may be mounted on a frame that is itself steerable with respect to another portion of the vehicle, such as wheels that are steered by articulating the frame or chassis of a vehicle. Some vehicles are configured to both steer wheels with respect to a frame to which they are coupled (traditional steering) and also to steer that frame with respect to another frame of the vehicle (articulated steering). Wheels that are steerable by more than one method of steering, such as this traditional steering plus articulated steering, are also considered steerable wheels.

The implement 102 to be pulled or towed by the tractor 100 can include a tongue 116, a tool bar 118 and a plurality of ground engagement tools 120 distributed along the length of the tool bar 118. The forward end of the tongue 116 can be coupled to the hitch 114 of the tractor 100 when the implement 102 and the tractor 100 are in proper alignment. The tongue 116 can extend backward away from the tractor, along a longitudinal centerline of the tractor, when the tongue 116 is connected or attached to the hitch 114. The tool bar 118 can be rigidly attached to the tongue 116, e.g., perpendicularly attached, and can extend laterally away from the tongue 116. The ground engagement tools 120 depend from or are supported by the tool bar 118. The tools engage the ground directly by contacting the ground, as in the case of a plow having multiple plowshares. Alternatively, the tools may engage the ground indirectly, as in the case of sprayer implement with multiple sprayer heads. In another embodiment, the implement 102 can be a trailer or other towed piece of equipment having a tongue or other connection device that can mate with the hitch 114 can be connected to the tractor 100.

At the beginning of a work cycle, the tractor 100 may not be coupled to the implement 102 and may be located in a separate area from the implement 102. To attach or connect to the implement 102, the operator or farmer has to drive the tractor 100 to the area where the implement 102 is located and then back the tractor 100 up to the implement 102, aligning the hitch 114 with the tongue 116 such that a hitch pin or other connecting mechanism(s) can be inserted in receiving apertures in the tongue 116 and the hitch 114. After inserting the hitch pin, thereby coupling the implement 102 to the tractor 100, the operator can drive the tractor and implement, which is towed behind the tractor, to the appropriate work area, e.g., a field to be cultivated. In another exemplary embodiment, instead of a hitch or drawbar connection between the tractor 100 and the implement 102, the tractor and the implement can be connected by a mounted connection, e.g., a 3-point hitch, or a semi-mount connection. Regardless of the particular connection type used, the tractor 100 and implement 102 have to be properly aligned in order to connect the implement 102 to the tractor 100.

As shown in FIG. 1, the tractor 100 is not aligned with the implement 102 to permit attachment or connection of the implement 102 to the tractor 100. The hitch 114 of the tractor 100 is offset from the tongue 116 of the implement 102 by a lateral distance (LAD) and a longitudinal distance (LOD). To align the tractor 100 and the implement 102, the tractor 100 has to be moved a distance substantially equal to the LAD along or parallel to the y-axis as shown in FIG. 1 and the tractor has to be moved a distance substantially equal to the LOD along or parallel to the x-axis as shown in FIG. 1. The x and y axes can be defined at a hitching area 104 of tongue 116. In another embodiment, the y and y axes can be defined at the hitch 114 of the tractor 100. To reposition the tractor 100 into the proper position for alignment with the implement 102, the automatic steering system or automatic guidance system of the tractor 100 can be provided with both the LAD and the LOD and then the automatic guidance system can steer or move the tractor 100 into the proper position.

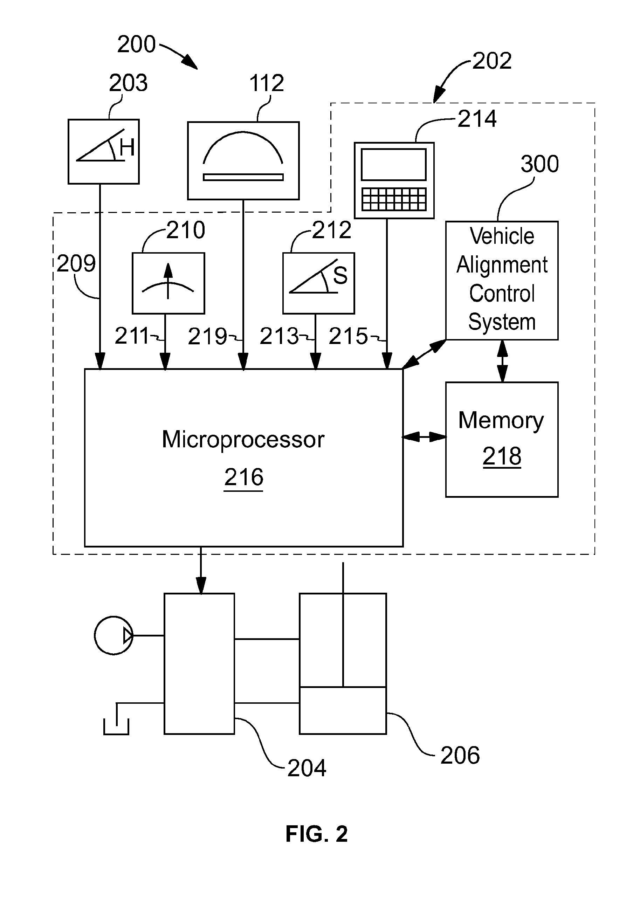

FIG. 2 shows an embodiment of an automatic guidance system. The automatic guidance system 200 can be located on or in the tractor 100 and can simplify the task of driving the tractor. The guidance system 200 can include an electronic control system 202, a GPS receiver 112, a hitch angle sensor 203 (may be used after an implement has been connected to the tractor), steering valves 204 and a steering actuator 206. The electronic control system on the controller 202 can be communicatively connected to the steering valves 204, the GPS receiver 112 and the hitch angle sensor 203. The steering valves 204 can be proportional or directional control valves that are hydraulically connected to the steering actuator 206. The steering actuator 206 can be coupled to and steer the steerable wheels 108, changing their steering angle. The electronic control system 202 can continually calculate a vehicle steering heading, and send the heading information to the steering valves 204 via a control signal, which in turn move the steering actuator 206, thereby causing the steerable wheels 108 to pivot, changing the vehicle heading. The control functions, control algorithms or control system provided by the automatic guidance system 200 can be provided by software instructions executed by the microprocessor 216 or other microprocessors incorporated into the electronic control system 202.

The electronic control system or controller 202 can be located on or in the tractor 100, and include a vehicle yaw rate sensor 210, a vehicle steering angle sensor 212, an operator input device 214, one or more microprocessors 216, and one or more digital memory circuits or memory devices 218. The yaw rate sensor 210, steering angle sensor 212, operator input device 214 and digital memory 218 are communicatively coupled to the microprocessor 216. The microprocessor 216 is communicatively coupled to the steering valves 204.

The vehicle yaw rate sensor 210 provides or sends a continual yaw rate signal 211 to the microprocessor 216, telling the microprocessor the rate at which the vehicle is changing its heading. The yaw rate sensor 210 may be a laser gyroscope or other rate gyroscope. Alternatively, the vehicle yaw rate sensor 210 may be a microprocessor circuit programmed to calculate the yaw rate from incoming signals or estimated or calculated values. The hitch angle sensor 203 can transmit a hitch angle signal 209 to the microprocessor 216.

The vehicle steering angle sensor 212 sends or provides a continual steering angle signal 213 to the microprocessor 216. The steering angle signal 213 tells the microprocessor the current angle of the steerable wheels. The steering angle sensor 212 may be an encoder mounted on the tractor 100, or may be a microprocessor circuit programmed to calculate steering angle based upon incoming signals and values stored in the digital memory 218. Alternatively, the steering angle sensor may include a Hall effect device, potentiometer, variable resistor, linear position transducer, or any other sensor in or on the steering actuator, the wheel, the wheel hub, or steering joint that senses wheel steering or relative movement or position of the wheel with respect to another part of the vehicle, such as wheel rotation about a steering kingpin, or alternatively senses the displacement or movement of the steering actuator or other linkage coupled thereto. If the vehicle is an articulated vehicle, the steering angle sensor 212 can be positioned to detect the angle between the two or more vehicle frames or subframes that move or steer with respect to each other in order to turn the vehicle.

The operator input device or user interface 214 can be configured to receive information relating to the tractor's offset from the implement (including lateral and/or longitudinal offsets) and/or the tractor's forward facing direction, i.e., direction of forward movement and to transmit the information to the microprocessor 216. Data entered by the operator on the input device 214 can be stored in the digital memory 218 by the microprocessor 216. The operator input device 214 can be mounted inside the operator compartment of the tractor 100, to be easily accessible to the operator. The operator input device 214 can include a display and a keyboard. The microprocessor 216 can receive process variables from the keyboard or other sensors, and can display the current status of the vehicle (location, direction, etc.) on the display.

The digital memory 218 stores microprocessor instructions and data. The instructions configure the microprocessor 216 to perform guidance functions. The memory also stores process data calculated or estimated by the microprocessor 216 and/or entered by the operator using the operator input device 214.

The GPS receiver 112 continually receives information about the absolute position of the vehicle and forwards a vehicle position signal 219 to the microprocessor 216 that indicates this absolute position. The GPS receiver 112 can be part of a satellite navigation system mounted on the outside of the tractor 100, with a clear line of sight to the satellites. Alternatively, the GPS receiver 112 may include an antenna mounted outside the tractor, while the receiver is mounted inside the tractor 100. Alternatives to a GPS receiver are differential global positioning systems (DGPS), land-based position receivers or dual-frequency real time kinematics (RTK) receivers using inertial navigation system (INS) sensors.

A vehicle alignment control system or controller 300 can be used to determine the appropriate path for the tractor 100 to bring the tractor 100 into alignment with the implement 102. The vehicle alignment control system 300 can receive information on the location of the tractor 100 from the GPS receiver 112, the lateral and/or longitudinal offset of the tractor 100 relative to the implement 102 from the operator input device 214, the angle of the steerable wheels 108 from steering angle sensor 212, a path used to position the tractor 100 into its current position from memory device 218 and the direction of forward movement of the tractor 100. The information provided to the vehicle alignment control system 300 can be from the microprocessor 216 or directly from the corresponding components of the automatic guidance system 200. Once the vehicle alignment control system 300 receives the appropriate information, the vehicle alignment control system 300 can determine the forward and/or reverse paths for the tractor 100 in order to adjust the tractor position by the lateral and longitudinal offsets entered by the operator. The control functions, control algorithms or control system provided by the vehicle alignment control system 300 can be provided by software instructions executed by the microprocessor 216 or by software instructions executed by a microprocessor dedicated to the vehicle alignment control system 300.

In one exemplary embodiment, the vehicle alignment control system 300 can store the path the tractor 100 used to approach the implement 102 in order to connect to the implement 102. The path taken by the tractor 100 can be represented by a series of waypoints that provide the location, e.g., GPS position, of the tractor 100 at each waypoint. The waypoints can be spaced apart by a distance ranging from about 1 meter to about 5 meters. The recording and storing of the waypoints can be performed automatically by the automatic guidance system 200 or the vehicle alignment control system 300 or the waypoints can be recorded and stored in response to the entry of a user command into the input device 214. The vehicle alignment control system 300 can then use the stored path of the tractor and the lateral and/or longitudinal offset of the tractor 100 relative to the implement 102 to calculate a new path for the tractor 100. In one embodiment, the calculated path can be determined by adjusting each stored waypoint in the stored path by the entered lateral and/or longitudinal offsets. Some examples of other algorithms for determining new paths based on previously determined paths can be found in U.S. Patent No. 7,715,919 and U.S. Patent No. 7,689,356, both of which patents are hereby incorporated by reference.

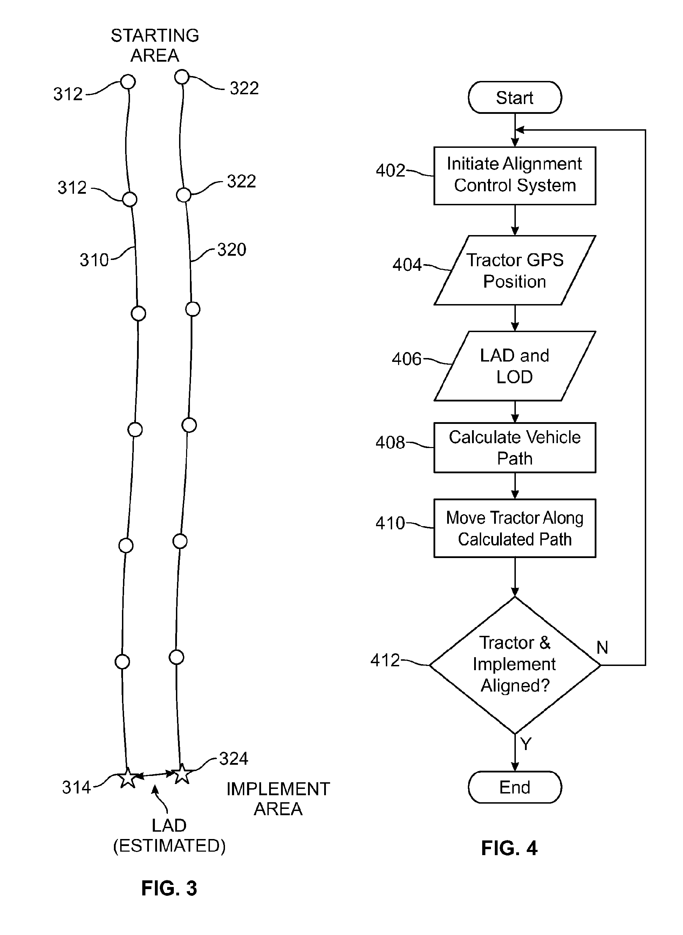

FIG. 3 shows a calculated path for a tractor 100 relative to the prior path taken by the tractor 100. The tractor 100 backs up or approaches implement 102 from a starting area that is a sufficient distance from the implement 102 in the implement area that the tractor 100 can make adjustments in its approach path. In FIG. 3, the tractor approaches the implement area following path 310. As shown in FIG. 3, path 310 is a curved path, but path 310 can be a straight line path. Path 310 can includes waypoints 312 that indicate the route taken by the tractor 100. The path 310 then stops at end waypoint 314, which end waypoint 314 is stored along with the direction of travel of the tractor 100. At the end waypoint 314, the operator enters estimates for the lateral and longitudinal offsets for the tractor 100 relative to the implement 102. As shown in FIG. 3, only a lateral offset, LAD is present. Once the estimated lateral and/or longitudinal offsets are known, vehicle alignment control system 300 calculates a new path for the tractor 100 to align the tractor 100 with the implement 102. The tractor 100 is pulled ahead from the end waypoint 314 back to the starting area and begins to follow the calculated path 320 determined by the vehicle alignment control system 300. The calculated path 320 includes calculated waypoints 322 that finish with calculated end waypoint 324, which corresponds to the position of the tractor 100 at end waypoint 314 adjusted by the lateral and/or longitudinal offsets entered by the operator. The remaining portion of the calculated path 320 can be interpolated from the calculated waypoints 322. When the tractor 100 is pulled forward, the tractor can be positioned at the first calculated waypoint 322 for the calculated path 320. Alternatively, if the tractor 100 is not located on a calculated waypoint 322, the tractor has to be steered until the position of tractor 100 corresponds to a calculated waypoint 322 and then the tractor 100 can be steered according to the calculated path.

In one exemplary embodiment, the operator input device 214 can display the calculated or intended path 320 of the tractor 100 and the actual position of the tractor 100, either as an overhead view from above the tractor 100, or from the operators point of view, looking out the window. In another embodiment, the input device 214 can also display or indicate the stored position of the implement (if stored when the implement was disconnected) with an icon, and when the operator enters the lateral and/or longitudinal offsets or distances, the calculated path would appear on the screen to permit the operator to verify the proper lateral (left/right) and/or longitudinal placements, and possibly the corresponding distances, if the tractor is to scale in the graphics. By displaying the tractor path relative to the implement, large errors, such as entering 24 ft instead of 24 inches, can be avoided.

FIG. 4 shows an embodiment of a process for aligning a vehicle, such as a tractor, and an implement. The process begins by engaging the vehicle alignment control system (step 402). The vehicle alignment control system can be engaged when the tractor has been backed up or is backing up to an implement but is not in proper alignment with the implement, i.e., the tractor is laterally and/or longitudinally offset from the implement.

After engaging the vehicle alignment control system, the tractor's GPS position is determined (step 404) and the lateral and/or longitudinal offsets are provided (step 406). The tractor's GPS position can be instantaneously obtained or can be determined over the span of several seconds. By determining the tractor's GPS position over several seconds, a more accurate tractor position can be determined, which can result in a more accurate path determination for the tractor. The lateral and/or longitudinal offsets are provided by the operator from actual measurements or from estimations performed by the operator. The lateral and/or longitudinal offsets can be distances defined according to a predetermined coordinate system, e.g., the x-y axes shown in FIG. 1, or the lateral and longitudinal offsets can be defined as a distance and a direction, e.g., left or right or fore or aft, from a predetermined point, e.g., hitch 114 or tongue 116.

The engaged vehicle alignment control system can then determine or calculate the appropriate vehicle or tractor path (step 408) in view of the tractor's GPS position and the lateral and longitudinal offsets. In addition, the vehicle alignment control system can receive information on the direction of forward movement for the tractor in making the path determination. The calculated path can include both forward and reverse direction paths based on the GPS location of the tractor when the vehicle alignment control system was engaged. A forward direction path may be required when there is insufficient longitudinal distance between the tractor and implement to make the necessary lateral adjustments.

After the vehicle or tractor path is determined, the tractor is moved along the calculated path (step 410). The automatic guidance system provides the appropriate control signals to the steering valves based on the calculated path and the tractor's current GPS position to adjust the position of the tractor. In one exemplary embodiment, tractor speed and tractor direction, i.e., forward or reverse, can also be controlled by the automatic guidance system. In another exemplary embodiment, tractor speed and tractor direction, i.e., forward or reverse, can be controlled by the operator.

Upon the completion of the tractor movement along the calculated path, the alignment of the tractor and implement is evaluated (step 412). If the tractor and implement are aligned, i.e., the implement can be attached to the tractor, the process ends. If the tractor and implement are not aligned, the process begins again with the engagement of the vehicle alignment control system and the entry of the lateral and/or longitudinal offsets.

In one exemplary embodiment, the operator can enter a distance representing how far the vehicle is to the left or right of the implement, after manually attempting to maneuver the vehicle to the appropriate position to attach the implement. At this point, the operator can engage the system for the automatic steering operation. The operator may then command the vehicle to move forward using the appropriate device for the given vehicle, for example, setting the gear direction lever to forward and releasing the inching pedal (clutch). The operator does not touch or operate the steering wheel (except for emergency situations) and permits the automatic steering system to steer the vehicle. If the vehicle has to move forward, the automatic steering system can give or provide an indication when the vehicle has moved far enough away from the implement. When the indication is given, the operator can stop the vehicle and place the vehicle in reverse to move back towards the implement. The automatic steering system can then continue to automatically steer the vehicle along the calculated path to adjust the position of the vehicle to the required distance to the left or right of the implement. Again, the automatic steering system can provide or give an indication when the vehicle is to be stopped and checked for alignment, i.e., the vehicle has completed its path. If the operator determines that the vehicle is still to the left or right of the implement, perhaps because the distance was estimated inaccurately, the operator can repeat the process by entering a new distance estimate.

In another exemplary embodiment, the operator can enter a distance to the left or right of the current vehicle position without being required to enter a vehicle heading. The heading of the vehicle can be determined using the auto-guidance direction used by the vehicle in approaching the implement. The implement position, i.e., the current vehicle position plus or minus the left or right distance, is not stored permanently, but only used for the short-term task of approaching the implement.

In a further exemplary embodiment, when the operator enters the distance(s) from the implement, the vehicle can be stationary and the GPS position of the vehicle can be averaged over several seconds to improve the accuracy of the calculated path determination. The accuracy of the calculated path following can also be better than typical results with auto-guidance systems, since the time between saving the positions from the initial path and returning to the corresponding positions on the calculated path can be very short since the distance to be travelled is relatively short. The auto-guidance system can also more accurately determine the vehicle position, i.e., the vehicle GPS position, relative to the path as the vehicle approaches the implement, since the vehicle is moving slowly and the GPS system is able to make more tractor position determinations.

In one exemplary embodiment, on some types of vehicles, such as agricultural tractors with continuously variable transmissions not only the left and right, but also the fore and aft position of the vehicle relative to the implement can be controlled. The continuously variable transmission (CVT) can permit the speed and optionally the position of the vehicle to be controlled quite precisely, since the CVT uses a hydrostatic pump and motor to control the speed, which is infinitely variable. The speed sensors used with the CVT can be configured to measure not only speed but position, and resolve it to high accuracies.

In one exemplary embodiment, tractor speed can be determined using a "tooth wheel" sensor. In a "tooth wheel" sensor, the sensor provides a signal each time a gear tooth passes by the sensor. The gear ratios can be configured such that there are many pulses or signals per revolution of the gear and corresponding wheel. Speed can be calculated by totaling the number of pulses or signals in a given period of time. Position can be calculated simply by the total number of pulses or signals, which would correspond to a distance traveled. In another embodiment, the "tooth wheel" sensor can be capable of detecting the direction of rotation of the gear, so position calculations can be accurate even if the tractor or vehicle reverses direction.

On vehicles with CVT transmissions, the vehicle can automatically slow and stop near the position where the lateral, i.e., left or right, error was recorded and the automatic steering was initiated to further assist the operator in quickly positioning the vehicle. In contrast, a tractor transmission with fixed gear ratios and a clutch may not provide accurate speed control when approaching a stop because the clutch must slip (by pressing the clutch pedal) to achieve slower speeds, since the engine speed can only be reduced to a lower limit (idle) or the engine will stall. In a further embodiment, the operator can move the vehicle with a CVT transmission backwards or forwards by discrete position increments. For example, the operator may be required to momentarily press one button for forward or another button for backward.

In an exemplary embodiment, the operator can store the specific GPS position and heading direction for the tractor when an implement is disconnected from the tractor, e.g., immediately after the implement is disconnected. Then, when the implement is to be reconnected to the tractor, the operator could recall the specific GPS position and heading direction of the tractor and the automatic guidance system can then steer and/or move the tractor into the appropriate position to connect to the implement. In another embodiment, as a manually operated tractor approaches the implement, the operator can initiate a special automatic steering mode that can approach the implement using the stored position information and the current position of the tractor. In a further embodiment, the special steering mode may only be permitted when the vehicle is properly positioned near the implement, i.e., the tractor has a predetermined heading and is within a predetermined distance of the implement.

In another exemplary embodiment, the vehicle alignment control system can be used to align the tractor or vehicle with an implement or component to be connected or mounted on the front of the tractor, i.e., the area near the steerable wheels 108. The vehicle alignment control system would generally operate as described above, but the operator would have to indicate that the connection area is at the front of the tractor or vehicle, instead of the rear, and the directions of travel for the tractor or vehicle would be switched.

It should be understood that the application is not limited to the details or methodology set forth in the following description or illustrated in the figures. It should also be understood that the phraseology and terminology employed herein is for the purpose of description only and should not be regarded as limiting.

The present application contemplates methods, systems and program products on any machine-readable media for accomplishing its operations. The embodiments of the present application may be implemented using existing computer processors, or by a special purpose computer processor for an appropriate system, or by a hardwired system.

Embodiments within the scope of the present application include program products including machine-readable media for carrying or having machine-executable instructions or data structures stored thereon. Machine-readable media can be any available non-transitory media that can be accessed by a general purpose or special purpose computer or other machine with a processor. By way of example, machine-readable media can include RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Combinations of the above are also included within the scope of machine-readable media. Machine-executable instructions comprise, for example, instructions and data which cause a general purpose computer, special purpose computer, or special purpose processing machines to perform a certain function or group of functions.

Although the figures herein may show a specific order of method steps, the order of the steps may differ from what is depicted. Also, two or more steps may be performed concurrently or with partial concurrence. Variations in step performance can depend on the software and hardware systems chosen and on designer choice. All such variations are within the scope of the application. Likewise, software implementations could be accomplished with standard programming techniques with rule based logic and other logic to accomplish the various connection steps, processing steps, comparison steps and decision steps.

In the further consideration of the drawings of this application and the discussion of such drawings and the elements shown therein, it should also be understood and appreciated that, for purposes of clarity in various of such drawings, pluralities of generally like elements positioned near to one another or extending along some distance may sometimes, if not often, be depicted as one or more representative elements with extended phantom lines indicating the general extent of such like elements. In such instances, the various elements so represented may generally be considered to be generally like the representative element depicted and generally operable in a like manner and for a like purpose as the representative element depicted.

Many of the fastening or connection processes and components utilized in the application are widely known and used, and their exact nature or type is not necessary for an understanding of the application by a person skilled in the art. Also, any reference herein to the terms "left" or "right" is used as a matter of mere convenience, and is determined by standing at the rear of the machine facing in its normal direction of travel. Furthermore, the various components shown or described herein for any specific embodiment in the application can be varied or altered as anticipated by the application and the practice of a specific embodiment of any element may already by widely known or used by persons skilled in the art.

It will be understood that changes in the details, materials, steps and arrangements of parts which have been described and illustrated to explain the nature of the application will occur to and may be made by those skilled in the art upon a reading of this disclosure within the principles and scope of the application. The foregoing description illustrates an exemplary embodiment of the invention; however, concepts, as based upon the description, may be employed in other embodiments without departing from the scope of the application.

While the application has been described with reference to an exemplary embodiment, it will be understood by those skilled in the art that various changes may be made and equivalents may be substituted for elements thereof without departing from the scope of the application. In addition, many modifications may be made to adapt a particular situation or material to the teachings of the application without departing from the essential scope thereof. Therefore, it is intended that the application not be limited to the particular embodiment disclosed as the best mode contemplated for carrying out this application, but that the invention will include all embodiments falling within the scope of the appended claims.

## Claims

1. A method for aligning a tractor (100) and an implement (102), the method comprising:
- determining a position of said tractor (100);
- determining a position of said implement (102);
- calculating a path for said tractor (100) using said position of said tractor (100) and the position of said implement (102), the calculated path being operable to move said tractor (100) toward the determined position of said implement (102); and **characterized in that** the method further comprises:
- automatically steering said tractor (100) along said calculated path with a control system (202).

2. The method of claim 1 further comprising:
- determining whether said tractor (100) is in alignment with said implement (102); and
- repeating the steps of determining a position of said tractor (100), determining a position of said implement (102), calculating a path for said tractor (102), automatically steering said tractor (100), and determining whether said tractor is in alignment with said implement (102) until said tractor (100) is in alignment with said implement (102).

3. The method of claim 1 or 2, wherein determining a position of said tractor (100) comprises determining a position of said tractor (100) using a global positioning system device (112).

4. The method according to any of the preceding claims, wherein determining a position of said implement (102) comprises:
- storing in a memory device (218) the global positioning system position of said tractor (100) when said implement (102) was disconnected from said tractor (102); and
- retrieving the stored position from said memory device (218).

5. The method according to claims 1 to 3, wherein determining a position of said implement (102) comprises:
- determining the position of said implement (102) relative to the position of said tractor (100).

6. The method of claim 5, wherein determining the position of said implement (102) relative to the position of said tractor (100) comprises:
- determining a lateral distance between a connection point on said implement (102) and a corresponding connection point on said tractor (100); and/or
- determining a longitudinal distance between a connection point on said implement (102) and a corresponding connection point on said tractor (100).

7. The method according to any of the preceding claims, wherein calculating a path for said tractor (100) comprises:
- calculating a first portion of the path corresponding to said tractor (100) moving in a forward direction; and
- calculating a second portion of the path corresponding to said tractor (100) moving in a reverse direction.

8. The method according to any of the preceding claims, wherein automatically steering said tractor (100) comprises adjusting a steering actuator (206) to adjust a steering angle of wheels on said tractor (100) to follow the calculated path and adjusting said steering actuator (206) comprises adjusting a position of a steering valve (204) controlling said steering actuator (206) in response to a control signal generated in response to the calculated path.

9. The method according to any of the preceding claims, further comprising storing a prior path of said tractor (100) used to approach said implement (102), and calculating a path for said tractor (100) comprises calculating a path for said tractor (100) using the stored prior path and a calculated difference between the position of said tractor (100) and the position of said implement (102).

10. An automatic guidance system (200) to align a tractor (100) with an implement (102) to be attached to said tractor (102), said automatic guidance system (200) comprising:
- a global positioning system device (112) to determine a position of said tractor (100);
- an input device (214), said input device (214) being configured and positioned to enable an operator to enter information regarding a position of said implement (102); and
**characterized in that** said system further comprises:
- a path controller operable to execute a computer program to calculate a path for said tractor (100) to align said tractor (100) and said implement (100) in response to receiving the position of said tractor (100) from said global positioning system device (112) and the position of said implement (102) entered into said input device (214); and a steer controller operable to execute a computer program to generate a control signal to steer said tractor (100) along said calculated path.

11. The automatic guidance system (200) of claim 10, wherein the position of said implement (102) corresponds to the global positioning system position of said tractor (100) when said implement (102) was disconnected from said tractor (100) or wherein the position of said implement (102) is provided relative to the position of said tractor (100).

12. The automatic guidance system (200) of claim 11, wherein the position of said implement (102) is provided as at least one of a lateral offset or longitudinal offset from the position of said tractor (100).

13. The automatic guidance system (200) according to any of claims 10 to 12 wherein the path calculated by said path controller is a path previously used by said tractor (100) to approach said implement (102) adjusted by the at least one of a lateral offset or longitudinal offset.

14. The automatic guidance system (200) according to any of claims 10 to 13 further comprising a steering valve (204) and the control signal from said steer controller adjusts a position of said steering valve (204) and a steering actuator (206) controlled by said steering valve (204), said steering actuator (204) being configured and positioned to adjust a steering angle of wheels on said tractor (100).

15. The automatic guidance system (200) according to any of the claims 10 to 14 wherein the computer program to calculate the path for said tractor (100) additionally uses a direction of forward movement for said tractor (100).

16. The automatic guidance system (200) according to any of claims 10 to 15 wherein the path calculated by said path controller includes a first portion with said tractor (100) moving in a forward direction and a second portion with said tractor (100) moving in a reverse direction, wherein the first portion of the path is used to position said tractor (100) for the second portion of the path.
